# EUROPEAN PATENT APPLICATION

(11) **EP 4 830 512 A1**
(43) Date of publication of application: **28.10.2026**
(21) Application number: 25769555.1
(22) Date of filing: 10.03.2025
(51) Int. Cl.: A01G 20/43

(54) **MULTIPURPOSE GARDENING TOOL SYSTEM, WORKING DEVICE AND MULTIPURPOSE GARDENING TOOL**

(30) Priority: 15.03.2024 CN 202410305893
(71) Applicant: Nanjing Chervon Industry Co., Ltd., Nanjing, Jiangsu 211106 (CN)
(72) Inventor: YI, Min, Nanjing, Jiangsu 211106 (CN); FENG, Jifeng, Nanjing, Jiangsu 211106 (CN); LI, Haiyan, Nanjing, Jiangsu 211106 (CN)
(74) Representative: Sun, Yiming
(86) International application number: PCT/CN2025/081629
(87) International publication number: WO 2025/190226

(57) **Abstract**

A multi-purpose garden tool system includes a first multi-purpose garden tool and a second multi-purpose garden tool. The first multi-purpose garden tool includes a first attachment interface for connecting a working device (200) and a first power device (300) for driving the working device (200) to work. The second multi-purpose garden tool includes a second attachment interface for connecting the working device (200) and a second power device for driving the working device (200) to work. The working device (200) is detachably adaptable to at least one of the first attachment interface and the second attachment interface, and at least one of the first multi-purpose garden tool and the second multi-purpose garden tool is a wheeled tool.

## Description

This application claims priority to Chinese Patent Application No. 202410305893.4 filed with the China National Intellectual Property Administration (CNIPA) on Mar. 15, 2024, the disclosure of which is incorporated herein by reference in its entirety.

### TECHNICAL FIELD

The present application relates to the technical field of garden tools, for example, a multi-purpose garden tool system, a working device, and a multi-purpose garden tool.

### BACKGROUND

Garden tools are maintenance equipment for human greening landscapes. The garden tools are mechanized tools that are primarily used for maintaining lawns and hedges and protecting flowers and trees and can replace most manual labor. In a conventional garden tool, the working head is generally fixedly connected to the frame. When the working head is damaged, the working head is difficult to repair, and the whole machine may even need to be replaced, resulting in high maintenance costs. In addition, a single garden tool implements only one function. When different tasks need to be completed, multiple different types of garden tools are required, increasing the user's purchasing costs and occupying a lot of storage space.

This part provides background information related to the present application, and the background information is not necessarily the existing art.

### SUMMARY

An object of the present application is to solve or at least alleviate part or all of the preceding problems. Therefore, the present application provides a multi-purpose garden tool system, a working device, and a multi-purpose garden tool.

To achieve the preceding object, the present application adopts the technical solutions below.

A multi-purpose garden tool system includes a first multi-purpose garden tool and a second multi-purpose garden tool. The first multi-purpose garden tool includes a first attachment interface for connecting a working device and a first power device for driving the working device to work. The second multi-purpose garden tool includes a second attachment interface for connecting the working device and a second power device for driving the working device to work. The working device is detachably adaptable to at least one of the first attachment interface and the second attachment interface, and at least one of the first multi-purpose garden tool and the second multi-purpose garden tool is a wheeled tool.

In some examples, at least one of the first multi-purpose garden tool or the second multi-purpose garden tool is a handheld tool.

In some examples, the first multi-purpose garden tool is adaptable to at least two of the multiple working devices.

In some examples, the second multi-purpose garden tool is adaptable to at least two of the multiple working devices.

In some examples, the multiple working devices include one or more of the following: a tilling head, a sweeping brush, a rubber brush, a grass trimming head, an edging head, and a snow shovel head.

In some examples, the first multi-purpose garden tool includes a first battery pack for supplying electrical energy to the first power device, and the energy of the first battery pack ranges from 150 Wh to 900 Wh.

In some examples, the second multi-purpose garden tool includes a second battery pack for supplying electrical energy to the second power device, and the energy of the second battery pack ranges from 150 Wh to 900 Wh.

In some examples, the maximum output power of the first multi-purpose garden tool ranges from 300 W to 5000 W.

In some examples, the multi-purpose garden tool system includes a detachable battery pack for supplying electrical power to at least the first power device or the second power device.

In some examples, the battery pack is compatible with at least one of the first multi-purpose garden tool and the second multi-purpose garden tool.

In some examples, the multi-purpose garden tool system includes a telescopic rod, and the working device is connected to the first attachment interface or the second attachment interface through the telescopic rod.

In some examples, a power device of the wheeled tool in the first multi-purpose garden tool and the second multi-purpose garden tool includes at least a motor, the wheeled tool further includes a battery pack for supplying power to the motor, and in a front and rear direction, the battery pack is located in front of the motor.

In some examples, a power device of the wheeled tool in the first multi-purpose garden tool and the second multi-purpose garden tool includes at least a motor, the wheeled tool further includes a battery pack for supplying power to the motor, and in an up and down direction, the battery pack is located below an output shaft of the motor.

In some examples, the wheeled tool in the first multi-purpose garden tool and the second multi-purpose garden tool includes a wheel set and a battery pack; the wheel set includes wheels that are rotatable about a wheel axis and used for supporting the movement of the wheeled tool on the ground; the battery pack is used for supplying power to a power device of the wheeled tool; and in a front and rear direction, the center of gravity of the battery pack is located in front of the wheel axis.

In some examples, a power device of the wheeled tool in the first multi-purpose garden tool and the second multi-purpose garden tool includes a motor; the wheeled tool further includes a wheel set, and the wheel set includes wheels that are rotatable about a wheel axis and used for supporting the movement of the wheeled tool on the ground; and in a front and rear direction, the center of gravity of the wheeled tool is located in front of the wheel axis, and the motor is located behind the wheel axis.

A working device for a multi-purpose garden tool system is provided. The multi-purpose garden tool system includes a first multi-purpose garden tool and a second multi-purpose garden tool. The first multi-purpose garden tool includes a first attachment interface and a first power device including at least a first motor for outputting power. The second multi-purpose garden tool includes a second attachment interface and a second power device including at least a second motor for outputting power. The working device for a multi-purpose garden tool system includes a connecting port that is selectively and detachably connected to the first attachment interface or the second attachment interface. At least one of the first multi-purpose garden tool or the second multi-purpose garden tool is a wheeled tool.

In some examples, the multi-purpose garden tool system further includes a telescopic rod having an extended state and a retracted state; and in the case where the first multi-purpose garden tool is a wheeled tool, the working device is connected to the first attachment interface of the first multi-purpose garden tool through the telescopic rod in the retracted state.

In some examples, in the case where the second multi-purpose garden tool is a handheld tool, the working device is connected to the second attachment interface of the second multi-purpose garden tool through the telescopic rod in the extended state.

A multi-purpose garden tool includes: a frame; a wheel set connected to the frame and including wheels that are rotatable about a wheel axis and used for supporting the movement of the multi-purpose garden tool on the ground; a first attachment interface for connecting a working device; and a first power device including at least a first motor and used for driving the working device to work. The working device is selectively connected to the first attachment interface or a second attachment interface of a second multi-purpose garden tool.

In some examples, the multi-purpose garden tool further includes a first battery pack for supplying power to the first motor, where in a front and rear direction, the first battery pack is located in front of the first motor.

A multi-purpose garden tool includes: a wheel set including wheels that are rotatable about a wheel axis and used for supporting the movement of the multi-purpose garden tool on the ground; a first power device including at least a first motor; multiple working devices, each of which is detachably connected to the first power device and driven by the first motor to implement a corresponding function of the multi-purpose garden tool; and a first battery pack for supplying power to the first motor. In a front and rear direction, the first battery pack is located in front of the first motor.

In some examples, in the front and rear direction, the center of gravity of the first battery pack is located in front of the wheels, and in an up and down direction, the center of gravity of the first battery pack is located above the wheels.

In some examples, the first motor is located behind the wheels in the front and rear direction.

In some examples, the working device includes a working head and a connection pipe connected to the working head. The connection pipe is detachably connected to the first power device. In the front and rear direction, the first battery pack is at least partially disposed between the working head and the wheels.

In some examples, the first battery pack is located below the connection pipe of the working device.

In some examples, in the front and rear direction, the center of gravity of the multi-purpose garden tool is located between the working head of the working device and the wheels.

In some examples, the multi-purpose garden tool further includes a second battery pack detachably mounted to the multi-purpose garden tool and used for performing at least one of the following: supplying power to the first motor or supplying power to other power tools after being detached.

In some examples, the energy of the first battery pack ranges from 150 Wh to 900 Wh.

In some examples, the multi-purpose garden tool includes a battery compartment, and the first battery pack is detachably mounted within the battery compartment.

In some examples, the battery compartment includes a compartment body and a compartment cover covering the opening of the compartment body, and the first battery pack is insertable into the compartment body.

A multi-purpose garden tool includes: a wheel set including wheels that are rotatable about a wheel axis and used for supporting the movement of the multi-purpose garden tool on the ground; a first power device including at least a first motor; multiple working devices, each of which is detachably connected to the first power device and driven by the first motor to implement a corresponding function of the multi-purpose garden tool; and a first battery pack for supplying power to the first motor. In an up and down direction, the first battery pack is located below an output shaft of the first motor.

A multi-purpose garden tool includes: a wheel set including wheels that are rotatable about a wheel axis and used for supporting the movement of the multi-purpose garden tool on the ground; a first power device including at least a first motor; a power supply device including at least a battery pack for supplying power to the first motor; and multiple working devices, each of which is detachably connected to the first power device and driven by the first motor to implement a corresponding function of the multi-purpose garden tool. In a front and rear direction, the center of gravity of the battery pack is located in front of the wheel axis.

A multi-purpose garden tool includes: a frame; a wheel set connected to the frame and including wheels that are rotatable about a wheel axis and used for supporting the movement of the multi-purpose garden tool on the ground; a first power device including at least a first motor; multiple working devices, each of which is detachably connected to the first power device and driven by the first motor to implement a corresponding function of the multi-purpose garden tool; and a power supply device including at least a battery pack for supplying power to the first motor. In a front and rear direction, the center of gravity of the multi-purpose garden tool is located in front of the wheel axis, and the first motor is located behind the wheel axis.

In some examples, the center of gravity of the battery pack is located in front of the wheels in the front and rear direction.

In some examples, the working device includes a working head and a connection pipe connected to the working head. The connection pipe is detachably connected to the first power device. In an up and down direction, the battery pack is located below the connection pipe of the working device.

In some examples, the center of gravity of the multi-purpose garden tool is located in front of the center of gravity of the battery pack.

In some examples, the battery pack is detachably connected to the frame.

In some examples, the power supply device includes multiple battery packs for supplying power to the first motor.

In some examples, the multi-purpose garden tool further includes an operating device configured to be held by the user and to enable the user to control the operation state of the first motor.

In some examples, the operating device includes two extension rods and is rotatably connected to the frame through the extension rods so that the operating device has an operating storage position and an operating working position.

A multi-purpose garden tool includes: a wheel set including wheels that are rotatable about a wheel axis and used for supporting the movement of the multi-purpose garden tool on the ground; a first power device including at least a first motor; multiple working devices, each of which is detachably connected to the first power device and driven by the first motor to implement a corresponding function of the multi-purpose garden tool; and a power supply device including at least a battery pack for supplying power to the first motor. In a front and rear direction, the center of gravity of the multi-purpose garden tool is located in front of the center of gravity of the battery pack; and the total energy of the power supply device is greater than or equal to 150 Wh and less than or equal to 900 Wh.

A multi-purpose garden tool includes: a frame; a wheel set connected to the frame and including wheels that are rotatable about a wheel axis and used for supporting the movement of the multi-purpose garden tool on the ground; a first power device including at least a first motor; multiple working devices, each of which is detachably connected to the first power device and driven by the first motor to implement a corresponding function of the multi-purpose garden tool; and a power supply device including at least a battery pack for supplying power to the first motor. In a front and rear direction, the distance L1 between the center of gravity of the multi-purpose garden tool and the wheel axis is greater than or equal to 0 mm and less than or equal to 300 mm; and the maximum output power of a working device of the multiple working devices is greater than or equal to 300 W and less than or equal to 5000 W.

A multi-purpose garden tool includes: a wheel set including wheels that are rotatable about a wheel axis and used for supporting the movement of the multi-purpose garden tool on the ground; a first power device including at least a first motor; multiple working devices, each of which is detachably connected to the first power device and driven by the first motor to implement a corresponding function of the multi-purpose garden tool; and a first locking member and a second locking member for locking or releasing a working device of the multiple working devices, where the first power device is removable when both the first locking member and the second locking member are in a releasing state.

In some examples, the working device includes a working head and a connection pipe connected to the working head, and the first locking member and the second locking member act on the connection pipe of the working device.

In some examples, the multi-purpose garden tool includes a battery pack for supplying electrical power to the first power device, and the first locking member and the second locking member are both disposed above the battery pack.

In some examples, at least one of the first locking member and the second locking member is a quick clamping device.

In some examples, the multi-purpose garden tool further includes a height adjustment device at least capable of adjusting the wheel set to switch between a wheel working position and a wheel storage position, and when the wheel set is at the wheel storage position, the wheels are not in contact with the ground.

In some examples, the height adjustment device includes a retaining member at least capable of locking the wheel set at the wheel working position or the wheel storage position.

In some examples, the multiple working devices include one or more of the following: a tilling head, a sweeping brush, a rubber brush, a grass trimming head, an edging head, and a snow shovel head.

A multi-purpose garden tool includes: a frame; a wheel set connected to the frame and including wheels that are rotatable about a wheel axis and used for supporting the movement of the multi-purpose garden tool on the ground; a first power device including at least a first motor; multiple working devices, each of which is detachably connected to the first power device and driven by the first motor to implement a corresponding function of the multi-purpose garden tool; and a power supply device including a controller and at least a battery pack for supplying power to the first motor. Each of the multiple working devices includes a working head, an identification element, and a connection pipe, the working head is connected to the first power device through the connection pipe, photoelectric parameters of identification elements are in one-to-one correspondence with the multiple working devices, and the identification element is connected to the controller through an electronic circuit disposed in the connection pipe.

In some examples, the controller acquires the photoelectric parameter of the identification element through the electronic circuit in the connection pipe to identify the type of the connected working device so that the working head is controlled in a control manner corresponding to the type of the working device, thereby implementing the corresponding function.

In some examples, in the control manners corresponding to different types of working devices, one or more of the rotational speed, acceleration, and current of the first motor are different.

In some examples, the first motor rotates at a full speed in mode one, rotates at a medium speed in mode two, and rotates at a low speed in mode three, where the full speed is greater than the medium speed, and the medium speed is greater than the low speed.

In some examples, the photoelectric parameter includes one or more of the resistance value, capacitance value, magnetic field strength, wavelength, and light color of the identification element.

In some examples, the identification elements are resistor elements with different resistance values.

In some examples, each working device further includes at least two locking members, namely a first locking member and a second locking member. The first locking member and the second locking member are used for locking or releasing the connection between the working device and the first power device. The first power device is removable when both the first locking member and the second locking member are in a releasing state.

In some examples, when at least one of the first locking member and the second locking member is in a locking state, the electronic circuit disposed in the connection pipe is connected to the controller at a position near at least one of the first locking member and the second locking member.

In some examples, through the electronic circuit disposed in the frame, the controller is connected to the electronic circuit disposed in the connection pipe at a position near at least one of the first locking member and the second locking member.

In some examples, through the electrode sheets, the electronic circuit connected to the identification element and the electronic circuit connected to the controller mate with each other at a position near at least one of the first locking member and the second locking member.

A multi-purpose garden tool includes: a first power device including at least a first motor; multiple working devices, each of which is detachably connected to the first power device and driven by the first motor to implement a corresponding function of the multi-purpose garden tool; and a power supply device including at least a battery pack for supplying power to the first motor. Each of the multiple working devices includes an engagement member, structures of engagement members are in one-to-one correspondence with the multiple working devices, the first power device includes an identification module, and the identification module includes a sensing member whose electrical parameter changes accordingly when the engagement member is connected to the first power device.

In some examples, the multi-purpose garden tool includes a wheel set, and the wheel set includes wheels that are rotatable about a wheel axis and used for supporting the movement of the multi-purpose garden tool on the ground.

In some examples, the identification module identifies the type of the connected working device based on the electrical parameter of the sensing member, thereby controlling the working device to implement the corresponding function in a control manner corresponding to the type of the working device.

In some examples, the engagement member is provided with a connecting portion connected to the sensing member during engagement, and the connecting portions of the engagement members of the working devices have different structures in at least one of the circumferential direction and the axial direction.

In some examples, the sensing member is a rheostat, and the resistance value of the rheostat changes depending on which engagement member is connected.

In some examples, magnetic members are disposed at different positions of the connecting portions of the engagement members of the working devices in at least one of the circumferential direction and the axial direction.

In some examples, the sensing member is a Hall element, and the electromagnetic parameter around the Hall element changes depending on which engagement member is connected.

In some examples, the first power device further includes a setting module for setting control manners corresponding to the multiple working devices.

In some examples, the first power device further includes a communication module that interacts with a user device via Bluetooth to acquire the control parameters corresponding to the control manners of the working devices.

### BRIEF DESCRIPTION OF DRAWINGS

FIG. 1 is a structural view of a multi-purpose garden tool from a first angle according to an example of the present application.
FIG. 2 is a structural view of a multi-purpose garden tool from a second angle according to an example of the present application, excluding a working device.
FIG. 3 is a structural view of a multi-purpose garden tool from a third angle according to an example of the present application, excluding a working device.
FIG. 4 is an enlarged view of part A in FIG. 3.
FIG. 5 is an enlarged view of part B in FIG. 3.
FIG. 6 is a structural view of a multi-purpose garden tool from a fourth angle according to an example of the present application.
FIG. 7 is an exploded view of a multi-purpose garden tool according to an example of the present application.
FIG. 8 is a structural view of a multi-purpose garden tool from a fifth angle according to an example of the present application, excluding a working device.
FIG. 9 is a structural view of a working device according to an example of the present application.
FIG. 10 is a partial structural view of a multi-purpose garden tool according to an example of the present application, with a wheel set located at a first position.
FIG. 11 is a partial structural view of a multi-purpose garden tool according to an example of the present application, with a wheel set located at a second position.
FIG. 12 is a structural view of a multi-purpose garden tool according to an example of the present application, with a wheel set located at a third position.
FIG. 13 is a structural view of a multi-purpose garden tool according to an example of the present application, with a working head as a brush.
FIG. 14 is a structural view of a handheld power tool according to an example of the present application.

### Reference list

- G1: center of gravity of the multi-purpose garden tool
- G2: center of gravity of the first battery pack
- L1: distance between the center of gravity of the multi-purpose garden tool and the wheel axis
- 100: frame
- 110: operating device
- 111: electronic switch
- 112: speed control knob
- 113: control handle
- 114: unlocking button
- 115: extension rod
- 116: fixing screw
- 117: fixing nut
- 120: first locking member
- 121: sleeve
- 1211: gap
- 122: first screw
- 130: second locking member
- 131: fixed base
- 132: pressing plate
- 133: second screw
- 140: height adjustment device
- 141: support rod
- 142: transmission rod
- 143: adjustment rod
- 1431: adjustment pin
- 144: retaining member
- 145: locking plate
- 1451: locking hole
- 160: hand handle
- 200: working device
- 210: working head
- 220: connection pipe
- 300: first power device
- 310: first motor
- 400: battery compartment
- 410: compartment body
- 420: compartment cover
- 500: wheel set
- 510: wheel bracket
- 520: wheel

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

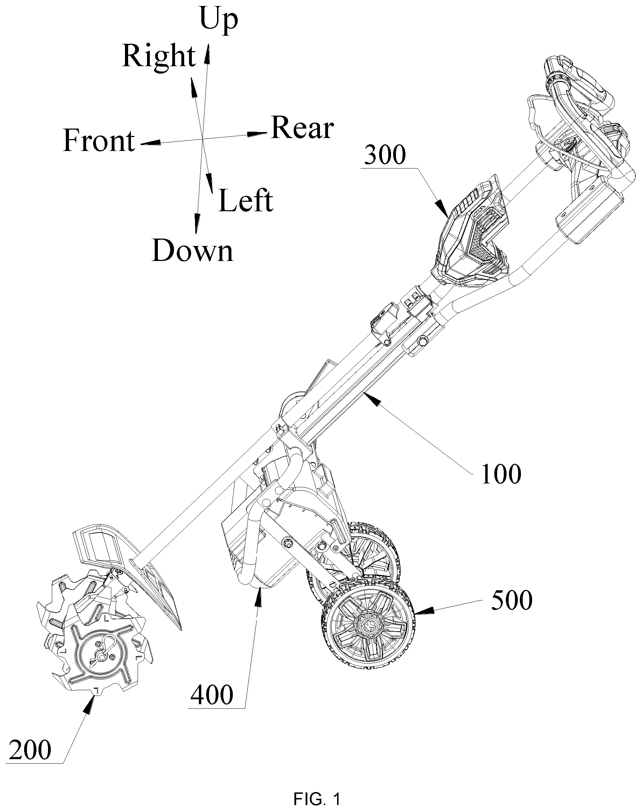

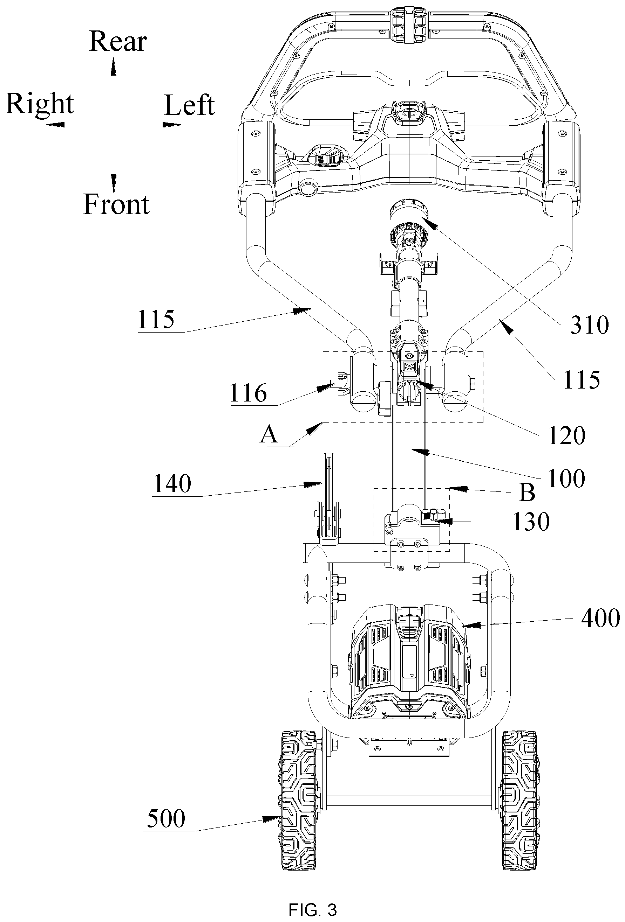

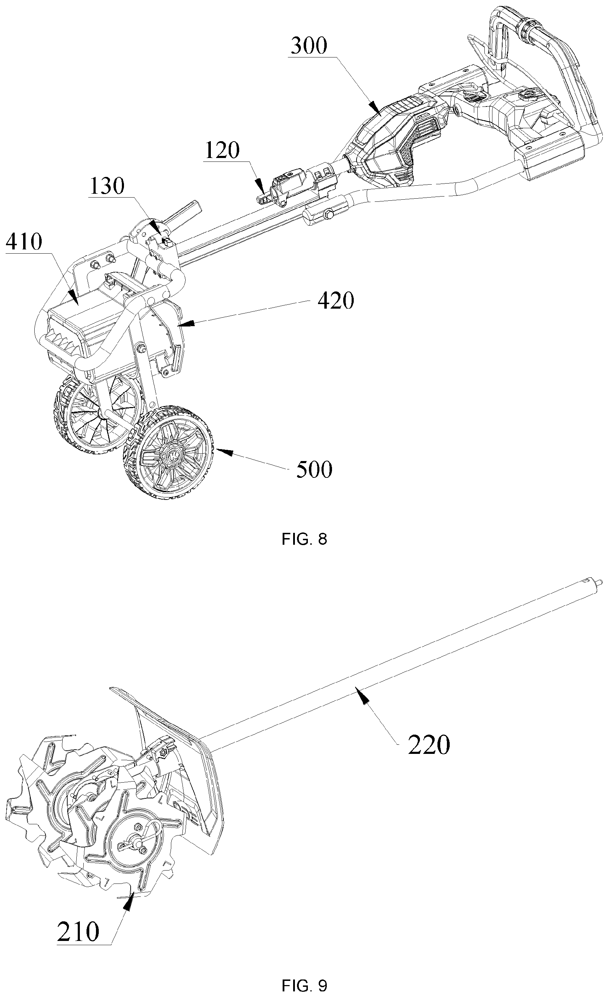

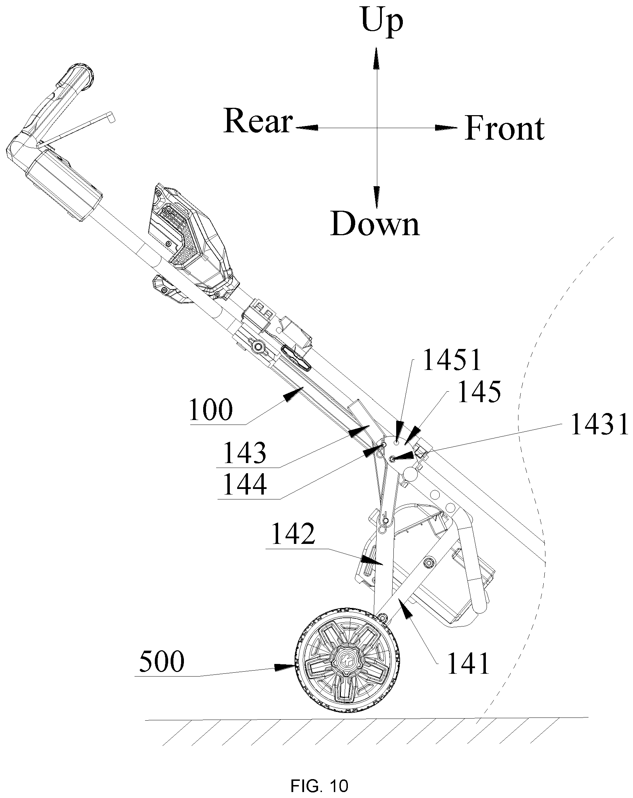

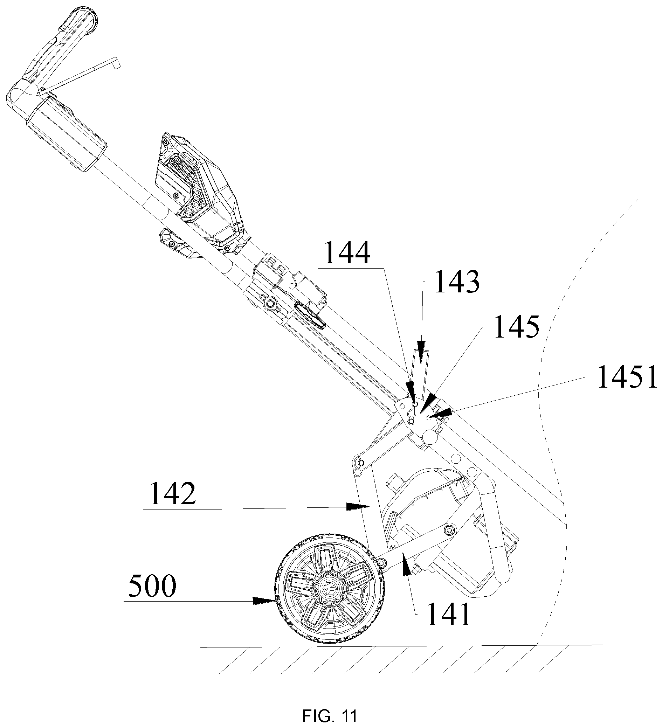

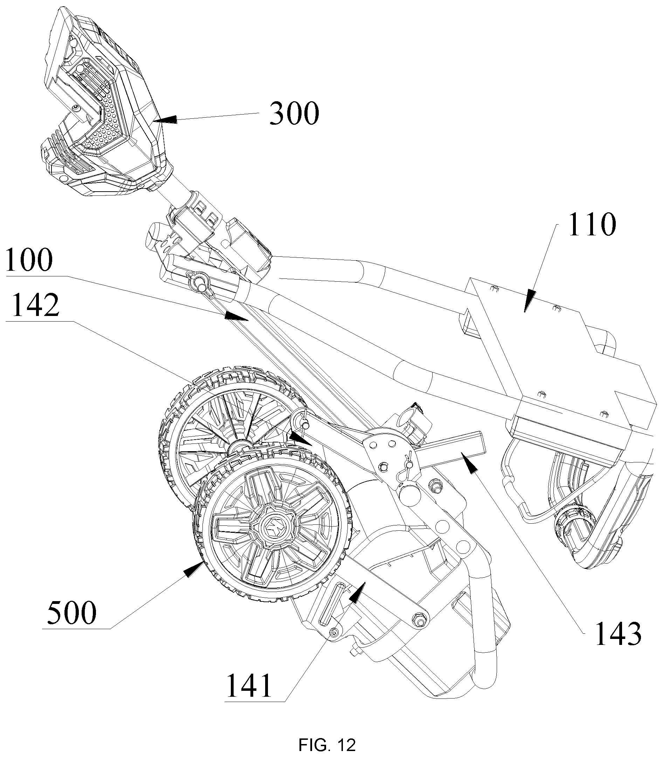

Referring to FIGS. 1 to 14, this example provides a multi-purpose garden tool system. The multi-purpose garden tool system includes a first multi-purpose garden tool and a second multi-purpose garden tool. The first multi-purpose garden tool includes a first attachment interface and a first power device 300, where the first attachment interface is used for connecting a working device 200, and the first power device 300 is used for driving the working device 200 to work. The second multi-purpose garden tool includes a second attachment interface and a second power device, where the second attachment interface is used for connecting the working device 200, and the second power device is used for driving the working device 200 to work. The working device 200 is detachably adaptable to at least one of the first attachment interface and the second attachment interface, and at least one of the first multi-purpose garden tool and the second multi-purpose garden tool is a wheeled tool. The first power device 300 and the second power device may be the same or different.

In this manner, multiple working devices 200 are each detachably assembled to the first attachment interface of the first multi-purpose garden tool or the second attachment interface of the second multi-purpose garden tool. That is, at least some of the multiple working devices 200 can each be assembled to the first attachment interface for coordinated operation with the first multi-purpose garden tool or the second attachment interface for coordinated operation with the second multi-purpose garden tool. Therefore, the working devices 200 are adaptable for use with different types of garden tools, particularly for switching between the handheld tools and the wheeled tools. Multiple working devices 200 within the same system can function in the handheld tools or the wheeled tools, significantly overcoming the isolation of working scenarios in the related art, enabling flexible responses to different working conditions, maintaining working flexibility, improving working efficiency, and reducing the labor intensity.

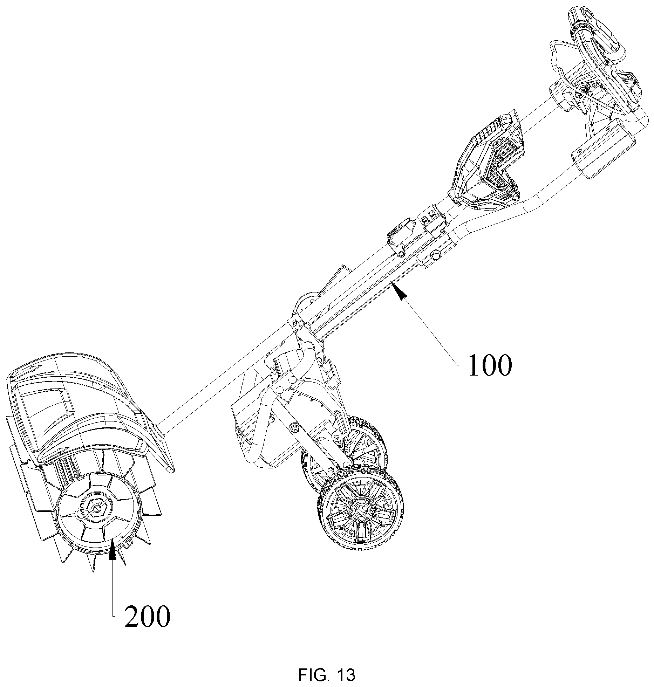

In the preceding examples, as shown in FIG. 13, at least one of the first multi-purpose garden tool and the second multi-purpose garden tool is a wheeled tool. The wheeled tool may be pushed by hand or self-propelled to perform tasks such as sweeping and cutting during movement and is particularly suitable for scenarios involving relatively heavy workloads or relatively heavy working devices.

In some examples, at least one of the first multi-purpose garden tool and the second multi-purpose garden tool is a handheld tool. The handheld tool is easy and flexible to operate and is suitable for scenarios involving relatively small areas or operations performed above the ground level. The operation performed above the ground level refers to a working scenario where the working position is higher than the ground.

In this manner, the multi-purpose garden tool system including the first multi-purpose garden tool and the second multi-purpose garden tool can satisfy requirements of various working scenarios, enable flexible responses to different working conditions, maintain working flexibility, improve working efficiency, and reduce the labor intensity.

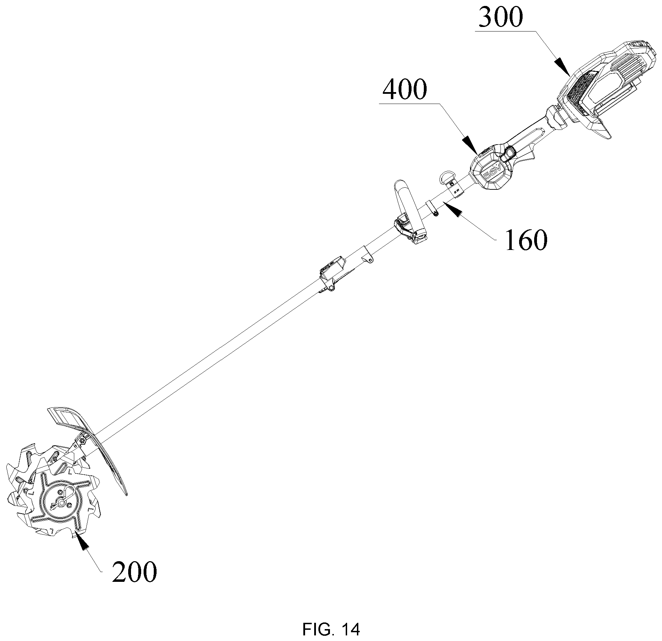

When the second multi-purpose garden tool is a handheld tool, as shown in FIG. 14, the second multi-purpose garden tool further includes a hand handle 160, an end of the hand handle 160 is connected to the working device 200, and the second power device is disposed at the other end of the hand handle 160. A power supply device is disposed on the hand handle 160. The power supply device includes a battery pack, and the battery pack is placed in a battery compartment 400.

In some examples, the first multi-purpose garden tool is adaptable to at least two of the multiple working devices 200. In this manner, the first multi-purpose garden tool can perform various tasks while requiring only one first power device 300, thereby reducing the space occupied by the first multi-purpose garden tool and reducing costs to a certain extent. Correspondingly, the second multi-purpose garden tool is adaptable to at least two of the multiple working devices 200. Some working devices 200 are compatible with both the first multi-purpose garden tool and the second multi-purpose garden tool.

For the working devices 200, in some examples, the multiple working devices 200 include one or more of the following: a tilling head, a sweeping brush, a rubber brush, a grass trimming head, an edging head, and a snow shovel head. In other examples, the working devices 200 may be configured to have other structures according to actual working requirements and are not limited to the preceding structures. As shown in FIG. 1, the first multi-purpose garden tool is a wheeled tool, and the working device 200 is a tilling head. As shown in FIG. 13, the first multi-purpose garden tool is a wheeled tool, and the working device 200 is a sweeping brush. As shown in FIG. 14, the second multi-purpose garden tool is a handheld tool, and the working device 200 is a tilling head.

To improve working efficiency, in some examples, the first multi-purpose garden tool includes a first battery pack for supplying electrical energy to the first power device 300, and the energy of the first battery pack ranges from 150 Wh to 900 Wh. Optionally, the energy of the first battery pack ranges from 150 Wh to 650 Wh. In some examples, the energy of the first battery pack is 300 Wh, 350 Wh, 360 Wh, 370 Wh, 380 Wh, 390 Wh, 400 Wh, 450 Wh, or 490 Wh.

In some examples, the second multi-purpose garden tool includes a second battery pack for supplying electrical energy to the second power device, and the energy of the second battery pack ranges from 150 Wh to 900 Wh. Optionally, the energy of the second battery pack ranges from 150 Wh to 650 Wh. In some examples, the energy of the first battery pack is 300 Wh, 350 Wh, 360 Wh, 370 Wh, 380 Wh, 390 Wh, 400 Wh, 450 Wh, or 490 Wh.

The maximum output power of the first multi-purpose garden tool ranges from 300 W to 5000 W. Optionally, the maximum output power of the first multi-purpose garden tool ranges from 300 W to 3500 W. Optionally, the maximum output power of the first multi-purpose garden tool ranges from 300 W to 2500 W. Optionally, the maximum output power of the first multi-purpose garden tool ranges from 300 W to 1800 W. In this manner, the multi-purpose garden tool can adapt to different working environments. When the working area is small and the requirement for working efficiency is lower, a lower maximum output power may be selected, such as 350 W, 400 W, or 500 W. When the working area is large and the requirement for working efficiency is higher, a higher maximum output power may be selected, such as 1200 W, 1800 W, 2000 W, 2500 W, 3500 W, or 4500 W. Moreover, in the case where different types of working devices 200 are assembled, the maximum output power of the first multi-purpose garden tool varies to adapt to the structures of the working devices 200 and the requirements for the corresponding working conditions. Correspondingly, the maximum output power of the second multi-purpose garden tool ranges from 300 W to 5000 W. Optionally, the maximum output power of the second multi-purpose garden tool ranges from 300 W to 3500 W. Optionally, the maximum output power of the second multi-purpose garden tool ranges from 300 W to 2500 W. Optionally, the maximum output power of the second multi-purpose garden tool ranges from 300 W to 5000 W. For the method for selecting the maximum output power of the second multi-purpose garden tool, reference is made to the preceding content.

In some examples, to improve the degree of automation and ease of use, the multi-purpose garden tool system includes a detachable battery pack for supplying electrical power to at least the first power device 300. Alternatively, the battery pack supplies electrical energy to at least the second power device of the second multi-purpose garden tool. In some examples, the first multi-purpose garden tool and the second multi-purpose garden tool may each be detachably connected to the battery pack, and the battery pack mounted to the first multi-purpose garden tool and the battery pack mounted to the second multi-purpose garden tool may be the same or different. The detachable battery pack is provided so that the battery pack is easy to replace, reducing subsequent maintenance costs. In some examples, either the first multi-purpose garden tool or the second multi-purpose garden tool may be powered without a battery pack.

In some examples, the battery pack is compatible with at least one of the first multi-purpose garden tool and the second multi-purpose garden tool. In some examples, the same battery pack is compatible with the first multi-purpose garden tool equipped with various types of working devices 200. In some other examples, the same battery pack is compatible with the first multi-purpose garden tool equipped with some types of working devices 200, while other battery packs are compatible with the first multi-purpose garden tool equipped with other types of working devices 200. Correspondingly, in some other examples, the same battery pack is compatible with the second multi-purpose garden tool equipped with various types or some types of working devices 200. In some other examples, the same battery pack is compatible with both the first multi-purpose garden tool and the second multi-purpose garden tool.

In some examples, the multi-purpose garden tool system includes a telescopic rod, and the working device 200 is connected to the first attachment interface or the second attachment interface through the telescopic rod. The preceding telescopic rod has an adjustable length to satisfy the installation requirements of different multi-purpose garden tools, adapt to various working conditions, and stabilize the center of gravity.

This example further provides a working device for a multi-purpose garden tool system. The multi-purpose garden tool system includes a first multi-purpose garden tool and a second multi-purpose garden tool. The first multi-purpose garden tool includes a first attachment interface and a first power device 300, where the first power device 300 includes at least a first motor 310 for outputting power. The second multi-purpose garden tool includes a second attachment interface and a second power device, where the second power device includes at least a second motor for outputting power. The working device for a multi-purpose garden tool system includes a connecting port that is detachably adapted to the first attachment interface or the second attachment interface. At least one of the first multi-purpose garden tool or the second multi-purpose garden tool is a wheeled tool.

In this manner, multiple working devices 200 are each detachably assembled to the first attachment interface of the first multi-purpose garden tool or the second attachment interface of the second multi-purpose garden tool. Therefore, the working devices 200 are adaptable for use with different types of garden tools, particularly for switching between the handheld tools and the wheeled tools. Multiple working devices 200 within the same system can function in the handheld tools or the wheeled tools, significantly overcoming the isolation of working scenarios in the related art. In this case, the working devices 200 can enable flexible responses to different working conditions, thereby maintaining working flexibility, improving working efficiency, and reducing the labor intensity.

In some examples, the multi-purpose garden tool system further includes a telescopic rod having an extended state and a retracted state; and in the case where the first multi-purpose garden tool is a wheeled tool, the working device 200 may be connected to the first attachment interface of the first multi-purpose garden tool through the telescopic rod in the retracted state.

In the case where the second multi-purpose garden tool is a handheld tool, the working device 200 may be connected to the second attachment interface of the second multi-purpose garden tool through the telescopic rod in the extended state. The length of the telescopic rod in the retracted state is less than the length of the telescopic rod in the extended state. The spacing requirement between the working device 200 and the tool attachment interface when the working device 200 is mounted to a wheeled tool is different from the spacing requirement between the working device 200 and the tool attachment interface when the working device 200 is mounted to a handheld tool. For some handheld tools, the preceding spacing needs to be larger, while for some wheeled tools, the preceding spacing needs to be smaller. The connection is achieved through the telescopic rod so that the preceding problems in the multi-purpose garden tool system can be effectively solved.

In some examples, the telescopic rod includes an outer sleeve and an inner rod, and the inner rod is inserted into the outer sleeve and is movable relative to the outer sleeve in the axial direction. The inner rod and the outer sleeve are screwed together. A locking member is used for locking the inner rod and the outer sleeve. Specifically, the locking member is a locking screw, and the locking member passes through the screw hole of the outer sleeve and abuts against the inner rod. The telescopic structure of the telescopic rod may adopt the implementation manner in the related art. The specific structure may be reasonably set according to the actual situation and is not specifically limited.

This example further provides a multi-purpose garden tool. The multi-purpose garden tool includes a wheel set 500, a first power device 300, multiple working devices 200, and a first battery pack. The wheel set 500 includes wheels 520 that are rotatable about a wheel axis and used for supporting the movement of the multi-purpose garden tool on the ground. The first power device 300 includes at least a first motor 310. Each of the multiple working devices 200 is detachably connected to the first power device 300 and driven by the first motor 310 to implement the corresponding function of the multi-purpose garden tool. The first battery pack supplies power to the first motor 310. In the front and rear direction, the first battery pack may be located in front of the first motor 310; and/or in the up and down direction, the first battery pack may be located below the output shaft of the first motor 310. The wheel set 500 further includes a wheel bracket 510, and two wheels 520 are spaced apart in the left and right direction and both rotatably disposed on the wheel bracket 510.

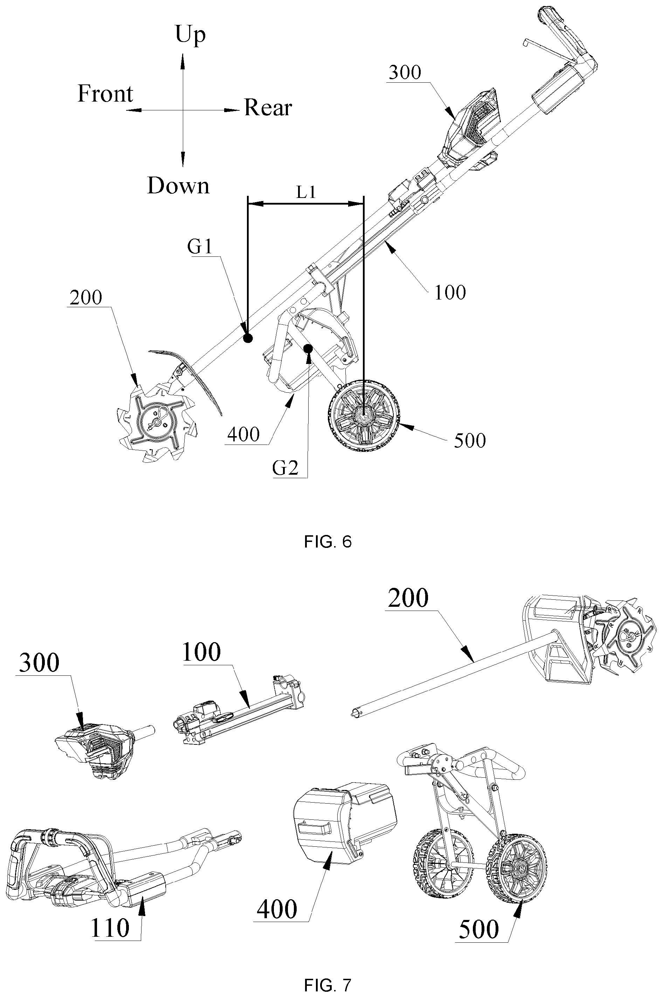

In this manner, as shown in FIG. 6, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. In the front and rear direction, the first battery pack is located in front of the first motor 310, and in the up and down direction, the first battery pack is located below the output shaft of the first motor 310 so that the distribution and arrangement of the working device, the first battery pack, and the first power device 300 in the multi-purpose garden tool are more conducive to stabilizing the center of gravity.

In the front and rear direction, the center of gravity G2 of the first battery pack may be located in front of the wheels 520, and in the up and down direction, the center of gravity G2 of the first battery pack may be located above the wheels 520. The center of gravity G2 of the first battery pack is disposed above the wheels 520, which is conducive to raising the installation position of the first battery pack, avoiding the risk of the first battery pack contacting the ground during the operation of the multi-purpose garden tool, and thus improving the safety of the first battery pack during use.

In some examples, the first motor 310 is located behind the wheels 520 in the front and rear direction. The preceding configuration is conducive to achieving a reasonable weight distribution for the multi-purpose garden tool, thereby facilitating lifting the front working device 200 off the ground using the wheels 520 as a fulcrum.

The working device 200 includes a working head 210 and a connection pipe 220 connected to the working head 210. The connection pipe 220 is detachably connected to the first power device 300. In the front and rear direction, the first battery pack is at least partially disposed between the working head 210 and the wheels 520. In this manner, the ease of connection between the working device 200 and the first power device 300 can be improved. The position configuration of the first battery pack is conducive to controlling the position of the center of gravity G1 of the multi-purpose garden tool, making the multi-purpose garden tool easier to use.

In some examples, the first battery pack is located below the connection pipe 220 of the working device 200, which is conducive to lowering the center of gravity G2 of the first battery pack and improving the stability of the multi-purpose garden tool.

In the front and rear direction, the center of gravity G1 of the multi-purpose garden tool is located between the working head 210 of the working device 200 and the wheels 520. In this manner, the multi-purpose garden tool can remain stable without being pushed by hand while the working device 200 and the wheels 520 are in contact with the ground.

Further, the distance between the center of gravity G1 of the multi-purpose garden tool and the first battery pack is less than the distance between the first battery pack and the wheels 520.

In some examples, the multi-purpose garden tool further includes a second battery pack detachably mounted to the multi-purpose garden tool and used for supplying power to the first motor 310. In addition, the second battery pack can supply power to other power tools after being detached.

The first battery pack and the second battery pack are arranged side by side. In some examples, the first battery pack and the second battery pack are connected in parallel or series to jointly supply power to the first motor 310. It is to be noted that the first battery pack and the second battery pack are independent battery packs, rather than the cells within a battery pack.

For the energy of the first battery pack, in some examples, the energy of the first battery pack ranges from 150 Wh to 900 Wh. Optionally, the energy of the first battery pack ranges from 150 Wh to 650 Wh. Specifically, the energy of the first battery pack may be 160 Wh, 170 Wh, 180 Wh, 190 Wh, 200 Wh, 300 Wh, 500 Wh, or 800 Wh.

To improve the safety of the first battery pack, the multi-purpose garden tool includes a battery compartment 400, and the first battery pack is detachably mounted within the battery compartment 400.

In some examples, the battery compartment 400 includes a compartment body 410 and a compartment cover 420 covering the opening of the compartment body 410, and the first battery pack is insertable into the compartment body 410.

The opening of the compartment body 410 is tilted upward, and the first battery pack is insertable into the compartment body 410 along a downward tilting direction. This configuration enables the first battery pack to be supported within the compartment body 410 and facilitates the placement and removal of the first battery pack.

In some examples, a multi-purpose garden tool is further provided and includes a wheel set 500, a first power device 300, a power supply device, and multiple working devices 200. The wheel set 500 includes wheels 520 that are rotatable about a wheel axis and used for supporting the movement of the multi-purpose garden tool on the ground. The first power device 300 includes at least a first motor 310. The power supply device includes at least one battery pack to supply power to the first motor 310. The multi-purpose garden tool further includes multiple working devices 200. Each of the multiple working devices 200 is detachably connected to the first power device 300 and driven by the first motor 310 to implement the corresponding function of the multi-purpose garden tool. In the front and rear direction, the center of gravity G2 of the battery pack is located in front of the wheel axis.

In this manner, as shown in FIG. 6, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. The center of gravity G2 of the battery pack is located in front of the wheel axis in the front and rear direction so that the distribution and arrangement of the wheel set, the working device, the first battery pack, and the first power device 300 in the multi-purpose garden tool are more conducive to user operation.

In some examples, a multi-purpose garden tool is further provided and includes a frame 100, a wheel set 500, a first power device 300, a power supply device, and multiple working devices 200. The wheel set 500 is connected to the frame 100 and includes wheels 520 that are rotatable about a wheel axis and used for supporting the movement of the multi-purpose garden tool on the ground. The first power device 300 includes at least a first motor 310. Each of the multiple working devices 200 is detachably connected to the first power device 300 and driven by the first motor 310 to implement the corresponding function of the multi-purpose garden tool. The power supply device includes at least one battery pack to supply power to the first motor 310. In the front and rear direction, the center of gravity G1 of the multi-purpose garden tool is located in front of the wheel axis, and the first motor 310 is located behind the wheel axis.

In this manner, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. In the front and rear direction, the center of gravity G2 of the battery pack is located in front of the wheels 520, which is conducive to adjusting the position of the center of gravity G1 of the whole machine.

The working device 200 includes a working head 210 and a connection pipe 220 connected to the working head 210. The connection pipe 220 is detachably connected to the first power device 300. In the up and down direction, the battery pack is located below the connection pipe 220 of the working device 200, which is conducive to lowering the center of gravity G2 of the battery pack and improving the stability of the multi-purpose garden tool.

The center of gravity G1 of the multi-purpose garden tool is located in front of the center of gravity G2 of the battery pack. In this manner, even when the battery pack is removed, the multi-purpose garden tool can remain stable under the support of the working device 200 and the wheels 520, thereby improving the stability of the multi-purpose garden tool and the replacement convenience of the battery pack.

In some examples, the battery pack is detachably connected to the frame 100. In this manner, the convenience of later maintenance can be improved and maintenance costs can be reduced.

The power supply device includes multiple battery packs for supplying power to the first motor 310. The multiple battery packs may have the same model or different models.

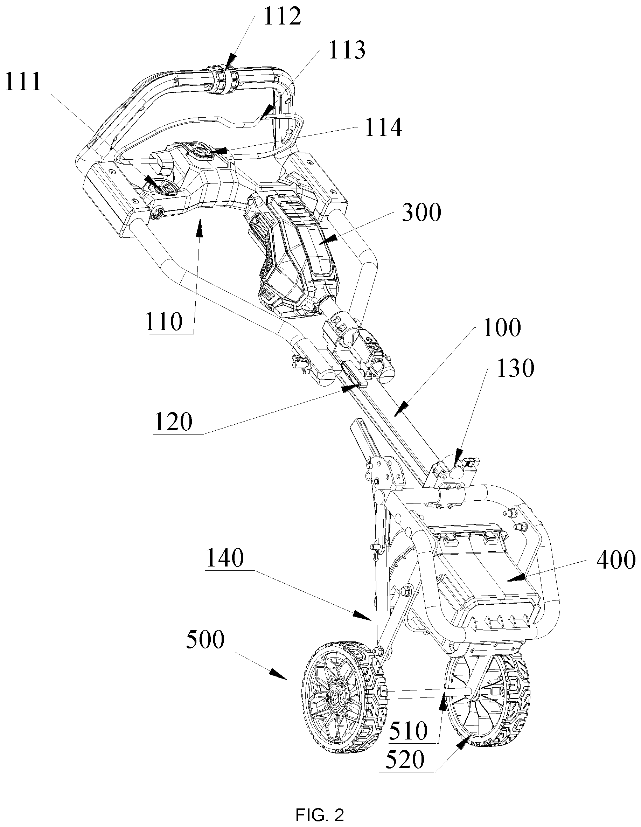

As shown in FIG. 2, in some examples, the multi-purpose garden tool further includes an operating device 110 configured to be held by the user and to enable the user to control the operation state of the first motor 310. The operating device 110 makes it easy to control the operation state of the multi-purpose garden tool. The operating device 110 includes an electronic switch 111, a speed control knob 112, a control handle 113, and an unlocking button 114. The electronic switch 111 and the speed control knob 112 can implement functions such as mode switching of the first power device 300 and rotational speed adjustment of the first motor 310. The control handle 113 and the unlocking button 114 are used for starting the multi-purpose garden tool. Specifically, the unlocking button 114 may be pressed first and then the control handle 113 is pushed.

The operating device 110 includes two extension rods 115 and is rotatably connected to the frame 100 through the extension rods 115 so that the operating device 110 has an operating storage position and an operating working position. In this manner, when the operating device 110 is at the storage position, the multi-purpose garden tool is easy to store, and the occupied space can be reduced. The frame 100 is provided with a mounting hole, two extension rods 115 clamp two sides of the frame 100, the extension rods 115 are provided with fixing holes, and a fixing screw 116 passes through the fixing holes and the mounting hole and is screwed to a fixing nut 117 so that the two extension rods 115 can clamp the left and right sides of the frame 100.

This example further provides a multi-purpose garden tool. The multi-purpose garden tool includes a wheel set 500, a first power device 300, a power supply device, and multiple working devices 200. The wheel set 500 includes wheels 520 that are rotatable about a wheel axis and used for supporting the movement of the multi-purpose garden tool on the ground. The first power device 300 includes at least a first motor 310. Each of the multiple working devices 200 is detachably connected to the first power device 300 and driven by the first motor 310 to implement the corresponding function of the multi-purpose garden tool. The power supply device includes at least one battery pack to supply power to the first motor 310. In the front and rear direction, the center of gravity G1 of the multi-purpose garden tool is located in front of the center of gravity G2 of the battery pack. The total energy of the power supply device is greater than or equal to 150 Wh and less than or equal to 900 Wh.

In this manner, as shown in FIG. 6, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. The center of gravity G1 of the multi-purpose garden tool is located in front of the center of gravity G2 of the battery pack so that even when the battery pack is removed, the multi-purpose garden tool can remain stable under the support of the working device 200 and the wheels 520, thereby improving the stability of the multi-purpose garden tool and the replacement convenience of the battery pack. The power supply device is provided with multiple energy ranges to adapt to different application scenarios.

This example further provides a multi-purpose garden tool. The multi-purpose garden tool includes a frame 100, a wheel set 500, a first power device 300, and multiple working devices 200. The wheel set 500 is connected to the frame 100 and includes wheels 520 that are rotatable about a wheel axis and used for supporting the movement of the multi-purpose garden tool on the ground. The first power device 300 includes at least a first motor 310. Each of the multiple working devices 200 is detachably connected to the first power device 300 and driven by the first motor 310 to implement the corresponding function of the multi-purpose garden tool.

The multi-purpose garden tool further includes a power supply device, and the power supply device includes at least one battery pack to supply power to the first motor 310. In the front and rear direction, the distance L1 between the center of gravity G1 of the multi-purpose garden tool and the wheel axis is greater than or equal to 0 mm and less than or equal to 300 mm. The maximum output power of the working device 200 is greater than or equal to 300 W and less than or equal to 5000 W.

In this manner, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. The positioning of the center of gravity G1 of the multi-purpose garden tool is conducive to minimizing the effort required to lift the working device 200 off the ground. The working device 200 is provided with multiple values of the maximum output power to adapt to different application scenarios.

This example further provides a multi-purpose garden tool. The multi-purpose garden tool includes a wheel set 500, a first power device 300, and multiple working devices 200. The wheel set 500 includes wheels 520 that are rotatable about a wheel axis and used for supporting the movement of the multi-purpose garden tool on the ground. The first power device 300 includes at least a first motor 310. Each of the multiple working devices 200 is detachably connected to the first power device 300 and driven by the first motor 310 to implement the corresponding function of the multi-purpose garden tool. The multi-purpose garden tool further includes a first locking member 120 and a second locking member 130 for locking or releasing the working device 200, and the first power device 300 is removable when both the first locking member 120 and the second locking member 130 are in a releasing state.

In this manner, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. The first locking member 120 and the second locking member 130 are provided, which is conducive to improving the connection convenience between the first power device 300 and the working device 200. The first locking member 120 and the second locking member 130 improve the ease of assembling and disassembling the first power device 300.

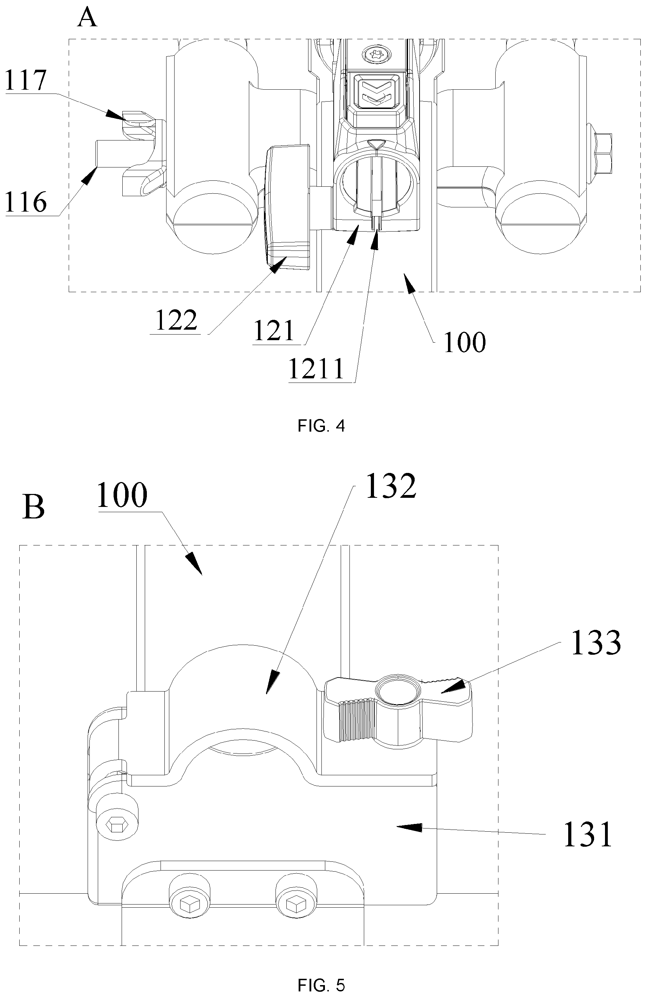

As shown in FIGS. 4 and 5, the working device 200 includes a working head 210 and a connection pipe 220 connected to the working head 210, and the first locking member 120 and the second locking member 130 act on the connection pipe 220 of the working device 200. The connection pipes 220 of different working devices 200 have the same structure. In this manner, the first locking member 120 and the second locking member 130 are suitable for different working devices 200.

In some examples, the multi-purpose garden tool includes a battery pack for supplying electrical power to the first power device 300, and the first locking member 120 and the second locking member 130 are both disposed above the battery pack. The battery pack improves the degree of automation and ease of use of the multi-purpose garden tool. The positioning of the battery pack and the two locking members is conducive to improving the ease of installation of the battery pack.

Specifically, at least one of the first locking member 120 and the second locking member 130 is a quick clamping device. Both the first locking member 120 and the second locking member 130 are quick clamping devices. The first locking member 120 includes a sleeve 121 provided with a gap 1211. The sleeve 121 is provided with a through hole on one side of the gap 1211 and a locking screw hole on the other side of the gap 1211. A first screw 122 passes through the through hole and is screwed into the locking screw hole. The first screw 122 can shrink the gap 1211 of the sleeve 121 so that the sleeve 121 tightly wraps the connection pipe 220.

The second locking member 130 includes a fixed base 131 and a pressing plate 132. One side of the pressing plate 132 is hinged to the fixed base 131, and the pressing plate 132 is rotatable between the open position and the locking position. When the pressing plate 132 is at the locking position, the connection pipe 220 can be clamped between the fixed base 131 and the pressing plate 132. The fixed base 131 is provided with a fixing screw hole, and a through hole is provided on the other side of the pressing plate 132. When the pressing plate 132 is at the locking position, a second screw 133 passes through the through hole and is screwed into the fixing screw hole to fix the pressing plate 132 to the fixed base 131, thereby clamping the connection pipe 220.

In some examples, the multi-purpose garden tool further includes a height adjustment device 140 at least capable of adjusting the wheel set 500 to switch between a wheel working position and a wheel storage position, and when the wheel set 500 is at the wheel storage position, the wheels 520 are not in contact with the ground, which is conducive to reducing the space occupied by the multi-purpose garden tool during storage.

Specifically, the height adjustment device 140 includes a support rod 141, an end of the support rod 141 is hinged to the frame 100 of the multi-purpose garden tool, the wheel set 500 is hinged to the other end of the support rod 141, and the support rod 141 swings to drive the wheel set 500 to switch between the wheel working position and the wheel storage position. The support rod 141 is connected to the wheel bracket 510 of the wheel set 500.

The height adjustment device 140 further includes a transmission rod 142 and an adjustment rod 143. The support rod 141 is provided with a transmission portion in the middle. An end of the transmission rod 142 is hinged to the transmission portion. The adjustment rod 143 is provided with an adjustment portion in the middle. The adjustment rod 143 is hinged to the frame 100 at the adjustment portion. An end of the adjustment rod 143 is hinged to the other end of the transmission rod 142. The other end of the adjustment rod 143 is moved to cause the adjustment rod 143 to rotate, thereby driving, through the transmission rod 142, the support rod 141 to swing. In this manner, the wheel set 500 can be adjusted to switch between the wheel working position and the wheel storage position.

To ensure the reliability of the position of the wheel set 500, in some examples, the height adjustment device 140 includes a retaining member 144 at least capable of locking the wheel set 500 at the wheel working position or the wheel storage position. Specifically, the frame 100 is provided with a locking plate 145, the locking plate 145 is provided with multiple locking holes 1451, the retaining member 144 is a pin, the adjustment rod 143 is provided with an adjustment hole, and the retaining member 144 can be inserted into the adjustment hole and inserted into one of the multiple locking holes 1451. In an example, the adjustment portion is provided with an adjustment hole and an adjustment pin 1431 is inserted into the adjustment hole and the frame 100 so that the adjustment rod 143 is hinged to the frame 100; and the locking holes 1451 are arranged around the outer periphery of the adjustment pin 1431. Three locking holes 1451 are provided. The three locking holes 1451 correspond to the three positions of the wheel set 500 relative to the frame 100. Specifically, the wheel set 500 has a wheel working position, a middle position, and a wheel storage position. The middle position is located between the wheel working position and the wheel storage position. The height of the multi-purpose garden tool when the wheel set 500 is at the wheel working position is higher than the height of the multi-purpose garden tool when the wheel set 500 is at the middle position, and the height of the multi-purpose garden tool when the wheel set 500 is at the middle position is higher than the height of the multi-purpose garden tool when the wheel set 500 is at the wheel storage position. In this manner, the usage requirements of users of different heights can be satisfied.

The multiple working devices 200 include one or more of the following: a tilling head, a sweeping brush, a rubber brush, a grass trimming head, an edging head, and a snow shovel head.

This example further provides a multi-purpose garden tool. The multi-purpose garden tool includes a frame 100, a wheel set 500, and a first power device 300. The wheel set 500 is connected to the frame 100 and includes wheels 520 that are rotatable about a wheel axis and used for supporting the movement of the multi-purpose garden tool on the ground. The first power device 300 includes at least a first motor 310. Each of the multiple working devices 200 is detachably connected to the first power device 300 and driven by the first motor 310 to implement the corresponding function of the multi-purpose garden tool. The multi-purpose garden tool further includes a power supply device. The power supply device includes a controller and at least one battery pack for supplying power to the first motor 310. Each working device 200 includes a working head 210, an identification element, and a connection pipe 220. The working head 210 is connected to the first power device 300 through the connection pipe 220. The photoelectric parameters of the identification elements are in one-to-one correspondence with the working devices 200. The identification element is connected to the controller through an electronic circuit disposed in the connection pipe 220.

In the preceding example, data transmission between the controller of the power supply device and the identification element of the working device 200 is performed through the electronic circuit disposed in the connection pipe 220. In some examples, the identification element is disposed on a fixed part in the working device 200, two wires may be led out from the identification element and pass through the connection pipe 220, and two wires may be led out from the controller and mate with the two wires led out from the identification element, thereby acquiring the preceding data.

In this manner, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. The identification element enables the controller to determine the type of the working device 200 so that the working device 200 can be driven in a corresponding manner, thereby correctly implementing the corresponding function of the multi-purpose garden tool.

The controller acquires the photoelectric parameter of the identification element through the electronic circuit in the connection pipe 220 to identify the type of the connected working device 200 so that the working head 210 is controlled in a control manner corresponding to the type of the working device 200, thereby implementing the corresponding function. The controller in the power supply device may transmit the type of the working head 210 to the controller in the first power device 300 so that the controller in the first power device 300 controls the working head 210 to work in a control manner corresponding to the type of the working head 210, thereby optimizing the hierarchical allocation of electronic control tasks of the multi-purpose garden tool. In some examples, the photoelectric parameter of the identification element may be transmitted to the controller of the first power device 300 through the electronic circuit disposed in the connection pipe 220.

In the control manners corresponding to different types of working devices 200, one or more of the rotational speed, acceleration, and current of the first motor 310 are different. In this manner, various different functions of the multi-purpose garden tool can be implemented.

For example, the first motor 310 rotates at a full speed in mode one, rotates at a medium speed in mode two, and rotates at a low speed in mode three, where the full speed is greater than the medium speed, and the medium speed is greater than the low speed. In this manner, the multi-purpose garden tool can adapt to different application scenarios. For example, mode one may be a chainsaw mode, and the first motor 310 rotates at the full speed when the assembled working device 200 is a chainsaw head; mode two may be a string trimmer mode, and the first motor 310 rotates at the medium speed when the assembled working device 200 is a string trimmer head; and mode three may be a hedge trimmer mode, and the first motor 310 rotates at the low speed when the assembled working device 200 is a hedge trimmer head.

Specifically, the photoelectric parameter includes one or more of the resistance value, capacitance value, magnetic field strength, wavelength, and light color of the identification element. In this manner, the controller can accurately identify the working device 200.

In some examples, the identification elements are resistor elements with different resistance values. Different resistor elements have different resistance values. The controller acquires the resistance value of the identification element through the electronic circuit in the connection pipe 220 to identify the type of the connected working device 200. In some other examples, the identification element may be a coil, and the controller may detect the magnetic field strength of the identification element; or the identification element may be a light-emitting element, and the controller may detect the light color of the identification element.

Each working device 200 further includes at least two locking members, namely a first locking member 120 and a second locking member 130. The first locking member 120 and the second locking member 130 are used for locking or releasing the connection between the working device 200 and the first power device 300. The first power device 300 is removable when both the first locking member 120 and the second locking member 130 are in a releasing state. The first locking member 120 and the second locking member 130 are provided, which facilitates the assembly and disassembly between the first power device 300 and the working device 200.

When the first locking member 120 and/or the second locking member 130 are in a locking state, the electronic circuit disposed in the connection pipe 220 is connected to the controller at a position near the first locking member 120 and/or the second locking member 130. In this manner, a reliable connection between the controller and the electronic circuit can be ensured.

In some examples, through the electronic circuit disposed in the frame 100, the controller is connected to the electronic circuit disposed in the connection pipe 220 at a position near the first locking member 120 and/or the second locking member 130.

In some examples, through the electrode sheets, the electronic circuit connected to the identification element and the electronic circuit connected to the controller mate with each other at a position near the first locking member 120 and/or the second locking member 130. The electrode sheets improve the connection reliability between the identification element and the controller.

Based on the above, two wires may be led out from the identification element in the working device 200 and pass through the connection pipe 220, and two wires may be led out from the controller of the power supply device and mate with the two wires led out from the identification element. In the preceding examples, the two wires led out from the identification element may pass through the connection pipe 220 and be connected to the conductive electrode sheet, and the two wires led out from the controller may be within the frame 100. For example, the two wires led out from the controller may pass through two support frames 100 that are on two sides of the battery compartment 400 and support the battery compartment 400 and be connected to the conductive electrode sheets. Moreover, when the working device 200 is mounted and connected to the first power device 300, the conductive electrode sheet of the connection pipe 220 mates with the conductive electrode sheets of the frame 100 at the position of the first locking member 120 and/or the second locking member 130 to achieve the preceding data transmission.

This example further provides a multi-purpose garden tool. The multi-purpose garden tool includes a first power device 300 and multiple working devices 200. The first power device 300 includes at least a first motor 310. Each of the multiple working devices 200 is detachably connected to the first power device 300 and driven by the first motor 310 to implement the corresponding function of the multi-purpose garden tool. The multi-purpose garden tool further includes a power supply device, and the power supply device includes at least one battery pack to supply power to the first motor 310. Each working device 200 includes an engagement member, and the structures of engagement members are in one-to-one correspondence with the working devices 200. The first power device 300 includes an identification module, and the identification module includes a sensing member whose electrical parameter changes accordingly when the engagement member is connected to the first power device 300.

In this manner, the multiple working devices 200 are each detachably assembled to the first power device 300 of the multi-purpose garden tool so that the working devices 200 are applicable to different application scenarios, thereby overcoming the isolation of working scenarios in the related art. In this case, the working devices 200 can enable flexible responses to different working conditions, thereby maintaining working flexibility, improving working efficiency, and reducing the labor intensity. The sensing member is provided so that the type of the working device 200 can be identified, and the corresponding function of the multi-purpose garden tool can be implemented according to the type of the working device 200.

In some examples, the multi-purpose garden tool includes a wheel set 500, and the wheel set 500 includes wheels 520 that are rotatable about a wheel axis and used for supporting the movement of the multi-purpose garden tool on the ground, which is conducive to improving the ease of use and reducing the labor intensity.

In some examples, the identification module identifies the type of the connected working device 200 based on the electrical parameter of the sensing member, thereby controlling the working device 200 to implement the corresponding function in a control manner corresponding to the type of the working device 200. In this manner, the structure can be simplified, the cost is low, and the success rate of identifying the type of the working device 200 can be improved.

The engagement member is provided with a connecting portion connected to the sensing member during engagement, and the connecting portions of the engagement members of the working devices 200 have different structures in the circumferential direction and/or the axial direction. Specifically, in a first implementation manner of this example, the connecting portions of the engagement members of the working devices 200 have different structures in the circumferential direction. In a second implementation manner of this example, the connecting portions of the engagement members of the working devices 200 have different structures in the axial direction. In a third implementation manner of this example, the connecting portions of the engagement members of the working devices 200 have different structures in both the circumferential direction and the axial direction.

In some examples, the sensing member is a rheostat, and the resistance value of the rheostat changes depending on which engagement member is connected. The rheostat is featured with high reliability, low costs, and ease of identification.

In some examples, magnetic members are disposed at different positions of the connecting portions of the engagement members of the working devices 200 in the circumferential direction and/or the axial direction. In a first implementation manner of this example, the magnetic members are disposed at different positions of the connecting portions of the engagement members of the working devices 200 in the circumferential direction. In a second implementation manner of this example, the magnetic members are disposed at different positions of the connecting portions of the engagement members of the working devices 200 in the axial direction. In a third implementation manner of this example, the magnetic members are disposed at different positions of the connecting portions of the engagement members of the working devices 200 in the circumferential direction and the axial direction.

In some examples, the sensing member is a Hall element, and the electromagnetic parameter around the Hall element changes depending on which engagement member is connected. The combination of the Hall element and the magnetic member is based on a mature technology, low in cost, and easy to calibrate.

To improve the ease of use, in some examples, the first power device 300 further includes a setting module for setting the control manners corresponding to the working devices 200. In this manner, the multi-purpose garden tool can customize the working manners of the working devices 200 according to requirements, thereby satisfying requirements of different working scenarios.

In some examples, the first power device 300 further includes a communication module that interacts with a user device via Bluetooth to acquire the control parameters corresponding to the control manners of the working devices 200. In this manner, not only can the ease of use be improved, but also the intelligence level of the multi-purpose garden tool can be improved.

In some examples, each type of working head 210 is provided with a power generation device and a signal transmission device, an output shaft rotates to generate electricity to drive the signal transmission device to wirelessly transmit the signal related to the type of the working head 210 to the controller in the power device, and then based on the type of the working head 210, the controller controls the working head 210 to work.

The technical effects of the present application include at least the following: a multi-purpose garden tool system, a working device, and a multi-purpose garden tool are provided; in the multi-purpose garden tool system, multiple working devices are each detachably assembled to the first attachment interface of the first multi-purpose garden tool or the second attachment interface of the second multi-purpose garden tool; therefore, the working devices are adaptable for use with different types of garden tools, particularly for switching between the handheld tools and the wheeled tools; and multiple working devices within the same system can function in the handheld tools or the wheeled tools, significantly overcoming the isolation of working scenarios in the related art, enabling flexible responses to different working conditions, maintaining working flexibility, improving working efficiency, and reducing the labor intensity.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A multi-purpose garden tool system, comprising a first multi-purpose garden tool and a second multi-purpose garden tool;
wherein the first multi-purpose garden tool comprises:
a first attachment interface for connecting a working device (200); and
a first power device (300) for driving the working device (200) to work;
wherein the second multi-purpose garden tool comprises:
a second attachment interface for connecting the working device (200); and
a second power device for driving the working device (200) to work;
wherein the working device (200) is detachably adaptable to at least one of the first attachment interface and the second attachment interface, and at least one of the first multi-purpose garden tool and the second multi-purpose garden tool is a wheeled tool.

2. The multi-purpose garden tool system of claim 1, wherein at least one of the first multi-purpose garden tool or the second multi-purpose garden tool is a handheld tool.

3. The multi-purpose garden tool system of claim 1, wherein the first multi-purpose garden tool is adaptable to at least two of a plurality of working devices (200).

4. The multi-purpose garden tool system of claim 1, wherein the second multi-purpose garden tool is adaptable to at least two of a plurality of working devices (200).

5. The multi-purpose garden tool system of claim 3 or 4, wherein the plurality of working devices (200) comprise one or more of the following: a tilling head, a sweeping brush, a rubber brush, a grass trimming head, an edging head, and a snow shovel head.

6. The multi-purpose garden tool system of claim 1, wherein the first multi-purpose garden tool comprises a first battery pack for supplying electrical energy to the first power device (300), and energy of the first battery pack ranges from 150 Wh to 900 Wh.

7. The multi-purpose garden tool system of claim 1, wherein the second multi-purpose garden tool comprises a second battery pack for supplying electrical energy to the second power device, and energy of the second battery pack ranges from 150 Wh to 900 Wh.

8. The multi-purpose garden tool system of claim 1, wherein maximum output power of the first multi-purpose garden tool ranges from 300 W to 5000 W.

9. The multi-purpose garden tool system of claim 1, further comprising a detachable battery pack for supplying electrical power to at least the first power device (300) or the second power device.

10. The multi-purpose garden tool system of claim 9, wherein the battery pack is compatible with at least one of the first multi-purpose garden tool and the second multi-purpose garden tool.

11. The multi-purpose garden tool system of claim 1, further comprising a telescopic rod, wherein the working device (200) is connected to the first attachment interface or the second attachment interface through the telescopic rod.

12. The multi-purpose garden tool system of claim 1, wherein a power device of the wheeled tool in the first multi-purpose garden tool and the second multi-purpose garden tool comprises at least a motor, the wheeled tool further comprises a battery pack for supplying power to the motor, and in a front and rear direction, the battery pack is located in front of the motor.

13. The multi-purpose garden tool system of claim 1, wherein a power device of the wheeled tool in the first multi-purpose garden tool and the second multi-purpose garden tool comprises at least a motor, the wheeled tool further comprises a battery pack for supplying power to the motor, and in an up and down direction, the battery pack is located below an output shaft of the motor.

14. The multi-purpose garden tool system of claim 1, wherein the wheeled tool in the first multi-purpose garden tool and the second multi-purpose garden tool comprises a wheel set and a battery pack; the wheel set comprises wheels that are rotatable about a wheel axis and used for supporting movement of the wheeled tool on the ground; the battery pack is used for supplying power to a power device of the wheeled tool; and in a front and rear direction, a center of gravity of the battery pack is located in front of the wheel axis.

15. The multi-purpose garden tool system of claim 1, wherein a power device of the wheeled tool in the first multi-purpose garden tool and the second multi-purpose garden tool comprises at least a motor; the wheeled tool further comprises a wheel set, and the wheel set comprises wheels that are rotatable about a wheel axis and used for supporting movement of the wheeled tool on the ground; and in a front and rear direction, a center of gravity of the wheeled tool is located in front of the wheel axis, and the motor is located behind the wheel axis.

16. A working device for a multi-purpose garden tool system, wherein the multi-purpose garden tool system comprises a first multi-purpose garden tool and a second multi-purpose garden tool;
wherein the first multi-purpose garden tool comprises:
a first attachment interface; and
a first power device (300) comprising at least a first motor (310) for outputting power;
wherein the second multi-purpose garden tool comprises:
a second attachment interface; and
a second power device comprising at least a second motor for outputting power;
wherein the working device comprises a connecting port that is selectively and detachably connected to the first attachment interface or the second attachment interface; and at least one of the first multi-purpose garden tool and the second multi-purpose garden tool is a wheeled tool.

17. The working device of claim 16, wherein the multi-purpose garden tool system further comprises a telescopic rod having an extended state and a retracted state; and in a case where the first multi-purpose garden tool is the wheeled tool, the working device is connected to the first attachment interface of the first multi-purpose garden tool through the telescopic rod in the retracted state.

18. The working device of claim 17, wherein in a case where the second multi-purpose garden tool is a handheld tool, the working device is connected to the second attachment interface of the second multi-purpose garden tool through the telescopic rod in the extended state.

19. A multi-purpose garden tool, comprising:
a frame;
a wheel set connected to the frame and comprising wheels (520) that are rotatable about a wheel axis and used for supporting movement of the multi-purpose garden tool on the ground;
a first attachment interface for connecting a working device (200); and
a first power device (300) comprising at least a first motor (310) and used for driving the working device (200) to work;
wherein the working device (200) is selectively connected to the first attachment interface or a second attachment interface of a second multi-purpose garden tool.

20. The multi-purpose garden tool of claim 19, further comprising a first battery pack for supplying power to the first motor, wherein in a front and rear direction, the first battery pack is located in front of the first motor.

21. A multi-purpose garden tool, comprising:
a wheel set (500) comprising wheels (520) that are rotatable about a wheel axis and used for supporting movement of the multi-purpose garden tool on the ground;
a first power device (300) comprising at least a first motor (310);
a plurality of working devices (200), one of which is detachably connected to the first power device (300) and driven by the first motor (310) to implement a corresponding function of the multi-purpose garden tool; and
a first battery pack for supplying power to the first motor (310);
wherein in a front and rear direction, the first battery pack is located in front of the first motor (310).

22. The multi-purpose garden tool of claim 21, wherein in the front and rear direction, a center of gravity of the first battery pack is located in front of the wheels (520), and in an up and down direction, the center of gravity of the first battery pack is located above the wheels (520).

23. The multi-purpose garden tool of claim 21, wherein the first motor (310) is located behind the wheels (520) in the front and rear direction.

24. The multi-purpose garden tool of claim 21, wherein a working device (200) of the plurality of working devices (200) comprises a working head (210) and a connection pipe (220) connected to the working head (210), the connection pipe (220) is detachably connected to the first power device (300), and in the front and rear direction, the first battery pack is at least partially disposed between the working head (210) and the wheels (520).

25. The multi-purpose garden tool of claim 24, wherein the first battery pack is located below the connection pipe (220) of the working device (200).

26. The multi-purpose garden tool of claim 21, wherein in the front and rear direction, a center of gravity of the multi-purpose garden tool is located between the working head (210) of the working device (200) and the wheels (520).

27. The multi-purpose garden tool of claim 21, further comprising a second battery pack detachably mounted to the multi-purpose garden tool and used for performing at least one of the following: supplying power to the first motor (310) or supplying power to other power tools after being detached.

28. The multi-purpose garden tool of claim 21, wherein energy of the first battery pack ranges from 150 Wh to 900 Wh.

29. The multi-purpose garden tool of claim 21, further comprising a battery compartment (400), wherein the first battery pack is detachably mounted within the battery compartment (400).

30. The multi-purpose garden tool of claim 29, wherein the battery compartment (400) comprises a compartment body (410) and a compartment cover (420) covering an opening of the compartment body (410), and the first battery pack is insertable into the compartment body (410).

31. A multi-purpose garden tool, comprising:
a wheel set (500) comprising wheels (520) that are rotatable about a wheel axis and used for supporting movement of the multi-purpose garden tool on the ground;
a first power device (300) comprising at least a first motor (310);
a plurality of working devices (200), each of which is detachably connected to the first power device (300) and driven by the first motor (310) to implement a corresponding function of the multi-purpose garden tool; and
a first battery pack for supplying power to the first motor (310);
wherein in an up and down direction, the first battery pack is located below an output shaft of the first motor (310).

32. A multi-purpose garden tool, comprising:
a wheel set (500) comprising wheels (520) that are rotatable about a wheel axis and used for supporting movement of the multi-purpose garden tool on the ground;
a first power device (300) comprising at least a first motor (310);
a power supply device comprising at least a battery pack for supplying power to the first motor (310); and
a plurality of working devices (200), each of which is detachably connected to the first power device (300) and driven by the first motor (310) to implement a corresponding function of the multi-purpose garden tool;
wherein in a front and rear direction, a center of gravity of the battery pack is located in front of the wheel axis.

33. A multi-purpose garden tool, comprising:
a frame (100);
a wheel set (500) connected to the frame (100) and comprising wheels (520) that are rotatable about a wheel axis and used for supporting movement of the multi-purpose garden tool on the ground;
a first power device (300) comprising at least a first motor (310);
a plurality of working devices (200), each of which is detachably connected to the first power device (300) and driven by the first motor (310) to implement a corresponding function of the multi-purpose garden tool; and
a power supply device comprising at least a battery pack for supplying power to the first motor (310);
wherein in a front and rear direction, a center of gravity of the multi-purpose garden tool is located in front of the wheel axis, and the first motor (310) is located behind the wheel axis.

34. The multi-purpose garden tool of claim 33, wherein a center of gravity of the battery pack is located in front of the wheels (520) in the front and rear direction.

35. The multi-purpose garden tool of claim 33, wherein a working device (200) of the plurality of working devices (200) comprises a working head (210) and a connection pipe (220) connected to the working head (210), the connection pipe (220) is detachably connected to the first power device (300), and in an up and down direction, the battery pack is located below the connection pipe (220) of the working device (200).

36. The multi-purpose garden tool of claim 33, wherein the center of gravity of the multi-purpose garden tool is located in front of a center of gravity of the battery pack.

37. The multi-purpose garden tool of claim 33, wherein the battery pack is detachably connected to the frame (100).

38. The multi-purpose garden tool of claim 33, wherein the power supply device comprises a plurality of battery packs for supplying power to the first motor (310).

39. The multi-purpose garden tool of claim 33, further comprising an operating device (110) configured to be held by a user and to enable the user to control an operation state of the first motor (310).

40. The multi-purpose garden tool of claim 39, wherein the operating device (110) comprises two extension rods (115) and is rotatably connected to the frame (100) through the extension rods (115) so that the operating device (110) has an operating storage position and an operating working position.

41. A multi-purpose garden tool, comprising:
a wheel set (500) comprising wheels (520) that are rotatable about a wheel axis and used for supporting movement of the multi-purpose garden tool on the ground;
a first power device (300) comprising at least a first motor (310);
a plurality of working devices (200), each of which is detachably connected to the first power device (300) and driven by the first motor (310) to implement a corresponding function of the multi-purpose garden tool; and
a power supply device comprising at least a battery pack for supplying power to the first motor (310);
wherein in a front and rear direction, a center of gravity of the multi-purpose garden tool is located in front of a center of gravity of the battery pack; and total energy of the power supply device is greater than or equal to 150 Wh and less than or equal to 900 Wh.

42. A multi-purpose garden tool, comprising:
a frame (100);
a wheel set (500) connected to the frame (100) and comprising wheels (520) that are rotatable about a wheel axis and used for supporting movement of the multi-purpose garden tool on the ground;
a first power device (300) comprising at least a first motor (310);
a plurality of working devices (200), each of which is detachably connected to the first power device (300) and driven by the first motor (310) to implement a corresponding function of the multi-purpose garden tool; and
a power supply device comprising at least a battery pack for supplying power to the first motor (310);
wherein in a front and rear direction, a distance L1 between a center of gravity of the multi-purpose garden tool and the wheel axis is greater than or equal to 0 mm and less than or equal to 300 mm; and maximum output power of a working device (200) of the plurality of working devices (200) is greater than or equal to 300 W and less than or equal to 5000 W.

43. A multi-purpose garden tool, comprising:
a wheel set (500) comprising wheels (520) that are rotatable about a wheel axis and used for supporting movement of the multi-purpose garden tool on the ground;
a first power device (300) comprising at least a first motor (310);
a plurality of working devices (200), each of which is detachably connected to the first power device (300) and driven by the first motor (310) to implement a corresponding function of the multi-purpose garden tool; and
a first locking member (120) and a second locking member (130) for locking or releasing a working device (200) of the plurality of working devices (200), wherein the first power device (300) is removable when both the first locking member (120) and the second locking member (130) are in a releasing state.

44. The multi-purpose garden tool of claim 43, wherein the working device (200) comprises a working head (210) and a connection pipe (220) connected to the working head (210), and the first locking member (120) and the second locking member (130) act on the connection pipe (220) of the working device (200).

45. The multi-purpose garden tool of claim 43, further comprising a battery pack for supplying electrical power to the first power device (300), wherein the first locking member (120) and the second locking member (130) are both disposed above the battery pack.

46. The multi-purpose garden tool of claim 43, wherein at least one of the first locking member (120) and the second locking member (130) is a quick clamping device.

47. The multi-purpose garden tool of claim 43, further comprising a height adjustment device (140) at least capable of adjusting the wheel set (500) to switch between a wheel working position and a wheel storage position, wherein when the wheel set (500) is at the wheel storage position, the wheels (520) are not in contact with the ground.

48. The multi-purpose garden tool of claim 47, wherein the height adjustment device (140) comprises a retaining member (144) at least capable of locking the wheel set (500) at the wheel working position or the wheel storage position.

49. The multi-purpose garden tool of claim 43, wherein the plurality of working devices (200) comprise one or more of the following: a tilling head, a sweeping brush, a rubber brush, a grass trimming head, an edging head, and a snow shovel head.

50. A multi-purpose garden tool, comprising:
a frame (100);
a wheel set (500) connected to the frame (100) and comprising wheels (520) that are rotatable about a wheel axis and used for supporting movement of the multi-purpose garden tool on the ground;
a first power device (300) comprising at least a first motor (310);
a plurality of working devices (200), each of which is detachably connected to the first power device (300) and driven by the first motor (310) to implement a corresponding function of the multi-purpose garden tool; and
a power supply device comprising a controller and at least a battery pack for supplying power to the first motor (310);
wherein each of the plurality of working devices (200) comprises a working head (210), an identification element, and a connection pipe (220), the working head (210) is connected to the first power device (300) through the connection pipe (220), a photoelectric parameter of identification elements are in one-to-one correspondence with each of the plurality of working devices (200), and the identification element is connected to the controller through an electronic circuit disposed in the connection pipe (220).

51. The multi-purpose garden tool of claim 50, wherein the controller acquires the photoelectric parameter of the identification element through the electronic circuit in the connection pipe (220) to identify a type of a connected working device (200) so that the working head (210) is controlled in a control manner corresponding to the type of the working device (200), thereby implementing the corresponding function.

52. The multi-purpose garden tool of claim 51, wherein in control manners corresponding to different types of working devices (200), one or more of a rotational speed, acceleration, and a current of the first motor (310) are different.

53. The multi-purpose garden tool of claim 52, wherein the first motor (310) rotates at a full speed in mode one, rotates at a medium speed in mode two, and rotates at a low speed in mode three, wherein the full speed is greater than the medium speed, and the medium speed is greater than the low speed.

54. The multi-purpose garden tool of claim 50, wherein the photoelectric parameter comprises one or more of a resistance value, a capacitance value, magnetic field strength, a wavelength, and a light color of the identification element.

55. The multi-purpose garden tool of claim 50, wherein the identification elements are resistor elements with different resistance values.

56. The multi-purpose garden tool of claim 51, wherein each of the plurality of working devices (200) further comprises at least two locking members, namely a first locking member (120) and a second locking member (130), the first locking member (120) and the second locking member (130) are used for locking or releasing a connection between the working device (200) and the first power device (300), and the first power device (300) is removable when both the first locking member (120) and the second locking member (130) are in a releasing state.

57. The multi-purpose garden tool of claim 56, wherein when at least one of the first locking member (120) and the second locking member (130) is in a locking state, the electronic circuit disposed in the connection pipe (220) is connected to the controller at a position near at least one of the first locking member (120) and the second locking member (130).

58. The multi-purpose garden tool of claim 56, wherein through an electronic circuit disposed in the frame (100), the controller is connected to the electronic circuit disposed in the connection pipe (220) at a position near at least one of the first locking member (120) and the second locking member (130).

59. The multi-purpose garden tool of claim 56, wherein through electrode sheets, an electronic circuit connected to the identification element and the electronic circuit connected to the controller mate with each other at a position near at least one of the first locking member (120) and the second locking member (130).

60. A multi-purpose garden tool, comprising:
a first power device (300) comprising at least a first motor (310);
a plurality of working devices (200), each of which is detachably connected to the first power device (300) and driven by the first motor (310) to implement a corresponding function of the multi-purpose garden tool; and
a power supply device comprising at least a battery pack for supplying power to the first motor (310);
wherein each of the plurality of working devices (200) comprises an engagement member, structures of engagement members are in one-to-one correspondence with the plurality of working devices (200), the first power device (300) comprises an identification module, and the identification module comprises a sensing member whose electrical parameter changes accordingly when the engagement member is connected to the first power device (300).

61. The multi-purpose garden tool of claim 60, further comprising a wheel set (500), wherein the wheel set (500) comprises wheels (520) that are rotatable about a wheel axis and used for supporting movement of the multi-purpose garden tool on the ground.

62. The multi-purpose garden tool of claim 60, wherein the identification module identifies a type of a connected working device (200) based on the electrical parameter of the sensing member, thereby controlling the working device (200) to implement the corresponding function in a control manner corresponding to the type of the working device (200).

63. The multi-purpose garden tool of claim 60, wherein the engagement member is provided with a connecting portion connected to the sensing member during engagement, and connecting portions of the engagement members of the plurality of working devices (200) have different structures in at least one of a circumferential direction and an axial direction.

64. The multi-purpose garden tool of claim 60, wherein the sensing member is a rheostat, and a resistance value of the rheostat changes depending on which engagement member is connected.

65. The multi-purpose garden tool of claim 60, wherein magnetic members are disposed at different positions of connecting portions of the engagement members of the plurality of working devices (200) in at least one of a circumferential direction and an axial direction.

66. The multi-purpose garden tool of claim 65, wherein the sensing member is a Hall element, and an electromagnetic parameter around the Hall element changes depending on which engagement member is connected.

67. The multi-purpose garden tool of claim 60, wherein the first power device (300) further comprises a setting module for setting control manners corresponding to the plurality of working devices (200).

68. The multi-purpose garden tool of claim 60, wherein the first power device (300) further comprises a communication module that interacts with a user device via Bluetooth to acquire control parameters corresponding to control manners of the plurality of working devices (200).
